# EUROPÄISCHE PATENTSCHRIFT

(11) **EP 2 462 795 B1**
(45) Veröffentlichungstag und Bekanntmachung des Hinweises auf die Patenterteilung: **01.01.2014**
(21) Anmeldenummer: 11008324.3
(22) Anmeldetag: 15.10.2011
(51) Int. Cl.: A01C 7/08

(54) **Pneumatische Verteilmaschine**
Pneumatic distribution machine
Machine de distribution pneumatique

(30) Priorität: 09.12.2010 DE 102010053883
(43) Veröffentlichungstag der Anmeldung: 13.06.2012
(73) Patentinhaber: RAUCH Landmaschinenfabrik GmbH, 76547 Sinzheim (DE)
(72) Erfinder: Speth, Friedrich, 76547 Sinzheim (DE); Klein, Frédéric, 67000 Strasbourg (FR); Gotzen, Christian, 41751 Viersen (DE); Schickinger, Harald, 76547 Sinzheim (DE); Boss, Florian, 76547 Sinzheim (DE); Dircks, Hartmut, 76547 Sinzheim (DE); Rauch, Norbert, Dr.h.c., 76547 Sinzheim (DE); Schickinger, Manfred, 76547 Sinzheim (DE)
(74) Vertreter: Lasch, Hartmut

(56) Entgegenhaltungen:
- EP-A1- 0 687 406
- EP-A2- 0 309 608
- EP-A2- 0 799 560
- DE-C1- 3 805 148

## Beschreibung

Die Erfindung betrifft eine pneumatische Verteilmaschine mit den Merkmalen des Oberbegriffs des Anspruchs 1.

Eine solche Verteilmaschine ist aus der EP 0 799 560 A1 und der DE 38 05 148 C1 bekannt. Es ist ferner bekannt (EP 0 799 560 A1), für die Betätigung des Absperrorgans einen Betätigungsmechanismus, der in den Auslaufstutzen integriert ist, vorzusehen. Da sich wahlweise jedes Absperrorgan betätigen lassen muss, muss bei der bekannten Ausführung jeder Auslaufstutzen mit einem integrierten Betätigungsmechanismus versehen sein. Dies ist konstruktiv und kostenmäßig aufwendig.

Der Erfindung liegt die Aufgabe zugrunde hier Abhilfe zu schaffen.

Diese Aufgabe wird mit dem Kennzeichen des Anspruchs 1 dadurch gelöst, dass jeder Auslaufstutzen an seiner Oberseite einen Montagesockel für einen Betätigungsmechanismus für das Absperrorgan aufweist.

Der Montagesockel erfüllt den Zweck, dass sich auf ihm Betätigungsmechanismen beliebiger Art an ausgewählten Auslaufstutzen montieren und von einem auf einen anderen Auslaufstutzen umsetzen lassen, so dass die Anzahl der Betätigungsmechanismen auf das notwendige Maß beschränkt ist. Durch die Anordnung des Montagesockels an der Oberseite des Auslaufstutzens lässt sich der Betätigungsmechanismus problemlos von außen montieren.

In einer ersten Ausführungsform weist der Betätigungsmechanismus ein Hebelgetriebe auf.

In dieser Ausgestaltung ist vorgesehen, dass das Hebelgetriebe manuell betätigbar und mittels einer über einen Totpunkt geführten Feder in der jeweiligen Endlage fixierbar ist, um ein ungewolltes Öffnen oder Schließen des Absperrorgans zu verhindern.

In einer anderen bevorzugten Ausführungsform weist der Betätigungsmechanismus mit dem Schwenklager des Absperrorgans verbundenen Schwenkarme auf.

Der manuell betätigbare Betätigungsmechanismus weist in diesem Fall eine im wesentlichen vertikal gelagerte Rändelscheibe auf, die über eine Kurbel auf eine die Schwenkarme verbindende Brücke wirkt.

Mittels der Rändelscheibe lässt sich das Absperrorgan aus der Schließstellung in die Öffnungsstellung und umgekehrt schwenken.

Um eine unbeabsichtigte Änderung der Position des Absperrorgans, beispielsweise durch überstreichende Äste oder dergleichen, zu verhindern, ist zwischen den Schwenkarmen eine Federsperre eingelegt, die die Schwenkarme in der jeweils eingestellten Position - der Öffnungs- oder Schließstellung des Absperrorgans - sichert.

Die Federsperre weist einen harfenartigen, in sich federnden Grundkörper auf, der nach außen ragende Zapfen mit Schrägflächen aufweist, die mit den Schwenkarmen zusammenwirken.

Statt einer manuellen Betätigung kann dem Betätigungsmechanismus auch ein fernbedienbarer Antrieb zugeordnet sein, der beispielsweise als Aktuator ausgebildet ist.

Der Aktuator wirkt in der ersten Ausführungsform des Betätigungsmechanismus auf einen Hebel des Hebelgetriebes, in der zweiten Ausführungsform über ein Kupplungsstück mit im wesentlichen senkrechten Längsschlitzen auf am Ende der Schwenkarme nach innen ragenden Zapfen.

Ein solcher Antrieb und somit das von ihm betätigte Absperrorgan lässt sich vom Traktor aus steuern. Durch Umsetzen des fernbedienbaren Antriebes von einem Montagesockel auf einen anderen oder dem Hinzufügen weiterer fernbedienbarer Antriebe kann an jedem beliebigen Auslaufstutzen die Gutzufuhr abgeschaltet werden. Hierdurch wird die Möglichkeit eröffnet, dass z.B. bei einem Einsatzwechsel von einem Feld zum nächsten andere Absperrorgane aktiviert werden z.B. für eine andere Fahrgassenbreite oder einen anderen Fahrgassenrhythmus. Dies ist insbesondere für Lohnunternehmer von Vorteil.

Eine modulare Anordnung lässt sich dann verwirklichen, wenn die Auslaufstutzen unten auf einer ringförmigen, das Steigrohr umgebenden Montageplatte und an einer oberen ringförmigen Montageplatte eingerastet sind, der von einem Deckel abgedeckt ist.

Die Auslaufstutzen werden dadurch positioniert, dass benachbarte Auslaufstutzen durch eine an ihrer einen Seite angeordnete Hülse und eine an ihrer gegenüberliegenden Seite angeordnete, korrespondierende Hohlkehle, in die die Hülse eingreift, ineinander geschachtelt sind.

Die Fixierung der ineinander geschachtelten Auslaufstutzen erfolgt dadurch, dass die Auslaufstutzen mittels die Hülsen und Konusscheiben durchgreifender Steckschrauben zwischen der Montageplatte und dem Deckel eingespannt sind.

Die Auslaufstutzen lassen sich auf diese Weise problemlos montieren und demontieren, um sie beispielsweise im Falle eines Defekts am Betätigungsmechanismus oder am schwenkbaren Absperrorgan auszutauschen.

Dies gilt insbesondere auch für einen einzelnen Auslaufstutzen. Es muss nicht der gesamte Verteilerkopf zerlegt werden.

Die erfindungsgemäße Ausbildung der Verteilmaschine bietet die Möglichkeit viele oder alle Auslaufstutzen mit einem fernbedienbaren Antrieb zu versehen und mittels einer elektronischen Logikschaltung der Absperrorgane die Gutzufuhr zu den Schlauchleitungen während der Vorwärtsbewegung stufenweise in Abhängigkeit der Vorwärtsgeschwindigkeit von rechts nach links oder umgekehrt abzuschalten oder einzuschalten und innerhalb einer Arbeitsbreite der gesamten Verteilmaschine Gut keilförmig auf dem Feld oder entlang der Feldgrenze zu verteilen.

Auf diese Weise lässt sich die Verteilung optimal an die Feldform anpassen.

Es kann ferner vorgesehen sein, dass die Gutmenge prozentual korrelierend mit dem Abschalt- bzw. Einschaltvorgang reduziert bzw. erhöht wird.

Dadurch ist Vorsorge dafür getroffen, dass nur eine solche Gutmenge in den Verteilerkopf gelangt, wie sie durch die geöffneten Absperrorgane in die Schlauchleitungen gelangen soll.

Bei pneumatischen Verteilmaschinen für Saatgut bietet die Erfindung die Möglichkeit viele oder alle Auslaufstutzen mit einem fernbedienbaren Antrieb zu versehen und mittels einer logischen Verknüpfung der Ab- und Zuschaltung der Absperrorgane die Reihenweite des ausgebrachten Saatgutes derart zu verändern, dass sich der Reihenabstand vervielfachen, z.B. verdoppeln lässt.

Der Standard-Reihenabstand ist normalerweise vorgegeben. Entsprechend viele Schlauchleitungen sind an den Verteilerkopf angeschlossen. Bei einer Sämaschine kann der Reihenabstand je nach Saatgut von dem Standardmaß abweichen. Die vorgenannte Ausführungsform gibt die Möglichkeit, die Maschine auf den gewünschten Reihenabstand einzustellen.

Dabei ist vorgesehen, dass die Gutmenge entsprechend der Veränderung des Reihenabstandes reduziert oder erhöht wird.

Dieser Möglichkeit der Einstellung dient die weitere Maßnahme, dass der Antrieb des Dosierorgans regelbar und die Menge des zu verteilenden Gutes, in Abhängigkeit von der Anzahl der geschlossenen bzw. geöffneten Absperrorgane anpassbar ist.

Zum gleichen Zweck wird vorgeschlagen, dass der Volumenstrom des Gebläses regelbar und an die Menge des zu verteilenden Gutes entsprechend der Anzahl der geschlossenen bzw. geöffneten Absperrorgane anpassbar ist.

Auf diese Weise ist Vorsorge dafür getroffen, dass nur soviel Luft mit dem geförderten Gut in den Vereilerkopf gelangt, wie für die einwandfreie Aufteilung auf die Schlauchleitungen erforderlich ist.

Nachstehend ist die Erfindung anhand von in der Zeichnung wiedergegebenen Ausführungsbeispielen beschrieben. In der Zeichnung zeigen:
- Fig. 1: eine schematische Ansicht einer pneumatischen Verteilmaschine von hinten;
- Fig. 2: eine perspektivische Ansicht der wesentlichen Bauteile einer pneumatischen Förderung mit Dosierorgan und Verteilerkopf;
- Fig. 3: eine perspektivische Ansicht eines Auslaufstutzens mit Aktuatorantrieb in der Schließstellung des Absperrorgans;
- Fig. 4: eine der Fig. 2 ähnliche Ansicht in der Öffnungsstellung des Absperrorgans;
- Fig. 5: eine perspektivische Ansicht eines Auflaufstutzens mit manuellem Betätigungsmechanismus in der Öffnungsstellung des Absperrorgans;
- Fig. 6: eine der Figur 5 ähnliche Ansicht auf die andere Seite in der Schließstellung des Absperrorgans;
- Fig. 7: eine perspektivische Draufsicht auf einen Teil des Verteilerkopfs während der Montage von zwei Auslaufstutzen und Einreihung derselben zwischen die bereits montierten Auslaufstutzen;
- Fig. 8: einen Schnitt entlang einer Sekante der ringförmigen oberen und unteren Montageplatte im Bereich der Auslaufstuten;
- Fig. 9: eine perspektivische Explosionsdarstellung einer anderen Ausführungsform des Betätigungsmechanismus;
- Fig. 10: den Betätigungsmechanismus gemäß Fig. 9 in Öffnungsstellung des Absperrorgans;
- Fig. 11: den Betätigungsmechanismus gemäß Fig. 9 in Schließstellung des Absperrorgans; und
- Fig. 12: die Ausführungsform gemäß Fig. 10 und 11 mit einem fernbedienbaren Antrieb.

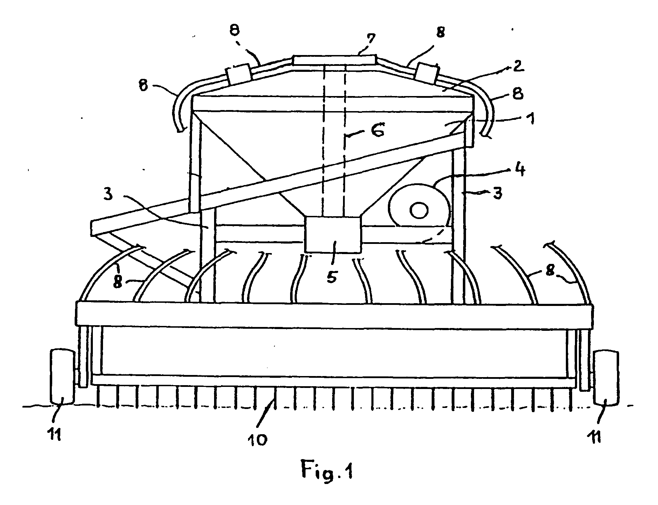

Die in Fig. 1 gezeigte pneumatische Verteilmaschine, die beispielsweise am Dreipunktgestänge eines Traktors direkt angebracht ist, weist einen Gutbehälter 1 mit einer Abdeckung 2 auf, die von Stützen 3 eines Tragrahmens aufgenommen sind. Auf dem Tragrahmen und unterhalb des Behälters ist ein Gebläse 4 angeordnet.

Das Saatgut gelangt über eine Übergabeeinrichtung 5 in den Förderluftstrom und wird von diesem in eine Steigleitung 6 nach oben in einen Verteilerkopf 7 gefördert. Über etwa radiale Abgänge am Verteilerkopf gelangt die Förderluft mit dem zu verteilenden Gut in Schlauchleitungen 8, die im Wesentlichen nach unten und hinten geführt sind und im Fall einer Sämaschine an nicht gezeigten Säscharen enden. Hinter den Säscharen laufen Zustreicher 10. Die Verteilmaschine ist über Stützräder 11 am Boden abgestützt und kann mittels derselben angehoben werden.

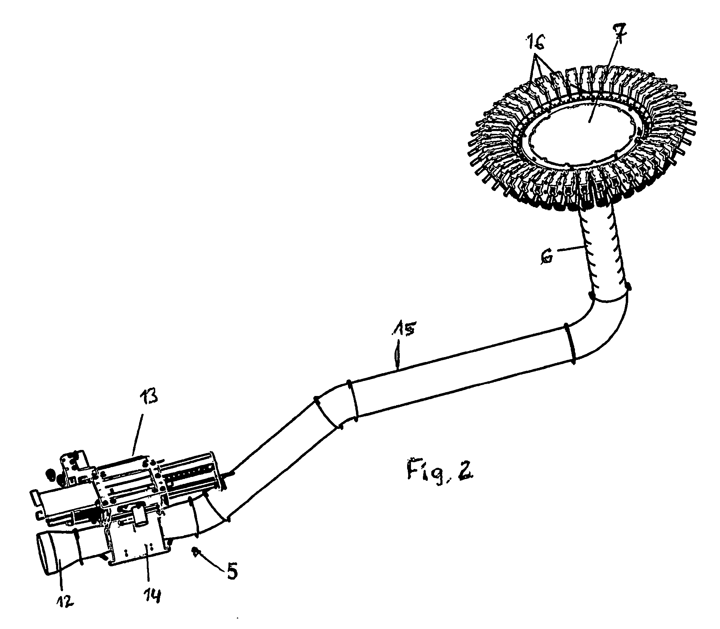

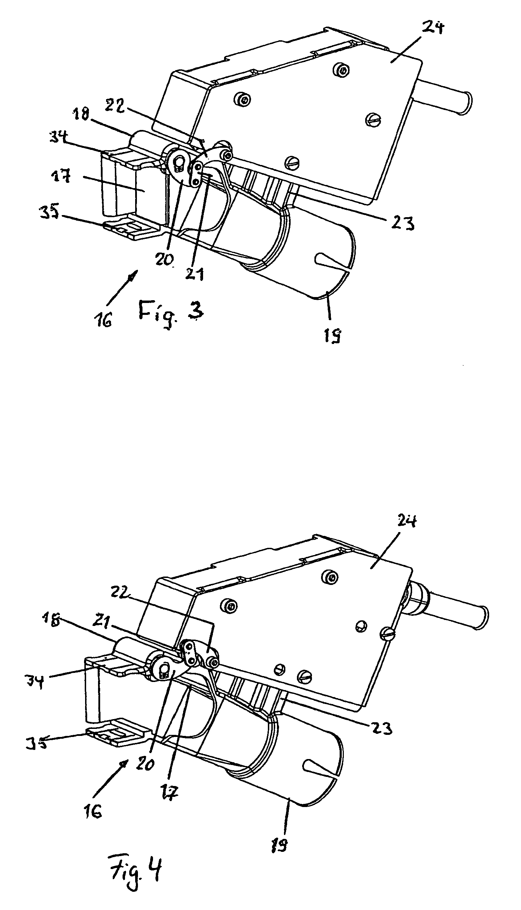

In Fig. 2 ist der pneumatische Teil der Verteilmaschine dargestellt. Es sind der Anschlussstutzen 12 an die Druckleitung und das die Übergabeeinrichtung des Gebläses 4 bildende Dosiergerät 13 und die Übergabekammer 14 mit dem Injektor erkennbar. An die Übergabekammer schließt sich eine Förderleitung 15 an, durch die das zu verteilende Gut in die Steigleitung 6 gelangt, die vorzugsweise als Wellrohr ausbildet ist, um für eine turbulente Strömung zu sorgen. Die Steigleitung 6 mündet im Zentrum des Verteilerkopfes 7, an dessen Innenumfang im Wesentlichen radial verlaufende Abgänge in Form von Auslaufstutzen 16 angesetzt sind. Zwei Ausführungsformen der Auslaufstutzen 16 sind in den Fig. 3 bis 6 wiedergegeben.

Jeder Auslaufstutzen 16 weist nahe seiner Ansatzstelle am Innenumfang des Verteilerkopfes 7 ein Absperrorgan auf. Das Absperrorgan ist als Klappe 17 ausgebildet, die an einer horizontalen Achse 18 schwenkbar ist. Am gegenüberliegenden Ende weist der Auslaufstutzen 16 einen Anschluss 19 für eine Schlauchleitung auf. Jeder Auslaufstutzen 16 weist einen Montagesockel 23 für einen Betätigungsmechanismus auf, der für das Verschwenken der Klappe 17 vorgesehen ist und ein aus den Hebeln 20, 21 und 22 bestehendes Hebelgetriebe aufweist. Der Hebel 20 sitzt fest auf der Schwenkachse 18. Bei dem Ausführungsbeispiel gemäß Fig. 3 und 4 ist auf dem Montagesockel 23 ein Gehäuse 24 befestigt, in welchem ein auf den Hebel 22 wirkender elektrischer Aktuator untergebracht ist.

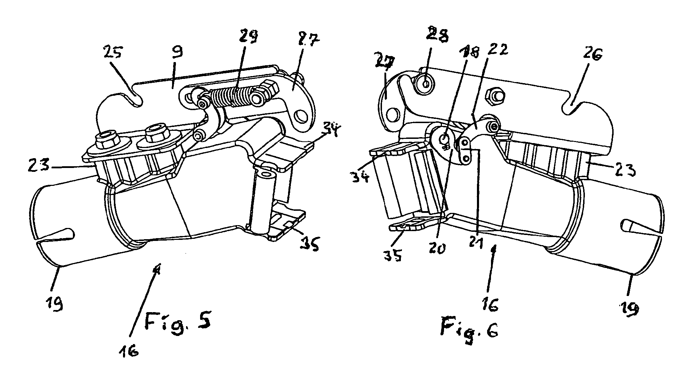

Bei der Ausführungsform nach den Fig. 5 und 6 ist ein manueller Betätigungsmechanismus vorgesehen. Er wirkt wie bei dem zuvor beschriebenen Ausführungsbeispiel wiederum auf ein Hebelgetriebe 20, 21, 22 auf, von denen der Hebel 20 auf die Schwenkachse 18 der Klappe 17 wirkt. Auf dem Montagesockel sitzt eine Leiste 9 mit im Bereich ihrer Enden angeordneten Vertiefungen 25 und 26. Zur Betätigung des Hebelgetriebes 20, 21, 22 dient eine Handhabe 27, die mit einem Zapfen 28 wahlweise in der einen oder anderen Vertiefung 25 bzw. 26 einlegbar ist. Die Handhabe steht unter Wirkung einer Feder 29, die beim Umlegen von der einen in die andere Vertiefung über einen Totpunkt wandert.

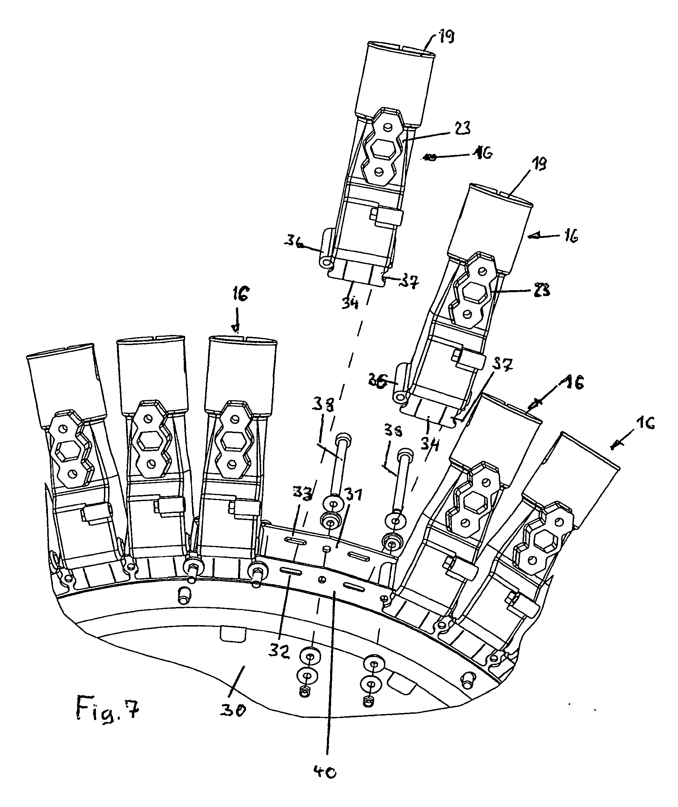

Fig. 7 zeigt einen Ausschnitt des Verteilerkopfes 7 in perspektivischer Draufsicht. Er besteht aus einer oberen Montageplatte 40 mit Deckel 30 und einer unteren ringförmigen Montageplatte 31, in deren nicht gezeigtem freien Zentrum die Steigleitung 6 mündet. In der oberen Montageplatte 40 und in der unteren Montageplatte 31 sind Längsschlitze 32 bzw. 33 vorgesehen, in die nachgiebigen Laschen 34 bzw. 35 am Eingang der Auslaufstutzen 16 (s. Fig. 5 bis 6) eingehängt werden.

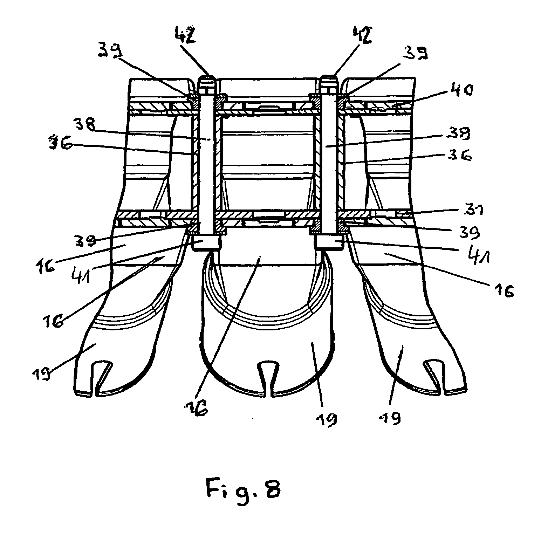

Jeder Auflaufstutzen weist an seiner einen Seite eine Hülse 36 und an seiner gegenüberliegenden Seite eine Hohlkehle 37 mit korrespondierendem Radius auf. Bei der Montage legt sich die Hülse 36 des einen Auslaufstutzens 16 in die Hohlkehle 37 des benachbarten Auslaufstutzens, so dass die Auslaufstutzen 16 radial positioniert sind. Mittels die Hülsen 36, und Konusscheiben 39 (Fig. 8) durchgreifender Steckschrauben 38 werden die Auslaufstutzen 16 zwischen Deckel 30 und Montageplatte 31 eingespannt. Auf diese Weise lassen sich die Auslaufstutzen 16 problemlos nebeneinander unter gleichzeitiger Verschachtelung montieren. Hierdurch wird die Dichtheit des gesamten Verteilerkopfes gewährleistet. In Fig. 8 ist der montierte Zustand der Auslaufstutzen 16 und ihre Verspannung zwischen den beiden ringförmigen Montageplatten 31 und 40 näher erkennbar. Zwischen dem Schraubenkopf 41 jeder Steckschraube 38 einerseits und der auf das Gewinde am gegenüberliegenden Ende aufgeschraubten Mutter 42 andererseits ist jeweils eine Konusscheibe 39 eingelegt, so dass beim Festziehen der Mutter 42 die Auslaufstutzen 16 mit den ringförmigen Montageplatten verspannt sind.

Mittels einer intelligenten Schaltung der Absperrorgane 17 ist es möglich, die Gutzufuhr zum Boden während der Vorwärtsbewegung stufenweise in Abhängigkeit der Vorwärtsgeschwindigkeit von rechts nach links oder umgekehrt zu unterbrechen oder einzuschalten. Dadurch kann das Gut innerhalb einer Arbeitsbreite der gesamten Maschine keilförmig auf dem Feld oder entlang einer Feldgrenze verteilt werden.

Mittels einer weiteren logischen Verknüpfung der Ab- und Zuschaltung der Absperrorgane 17 kann die Reihenweite des ausgebrachten Saatgutes derart verändert werden, dass sich der Reihenabstand vervielfachen z.B. verdoppeln lässt.

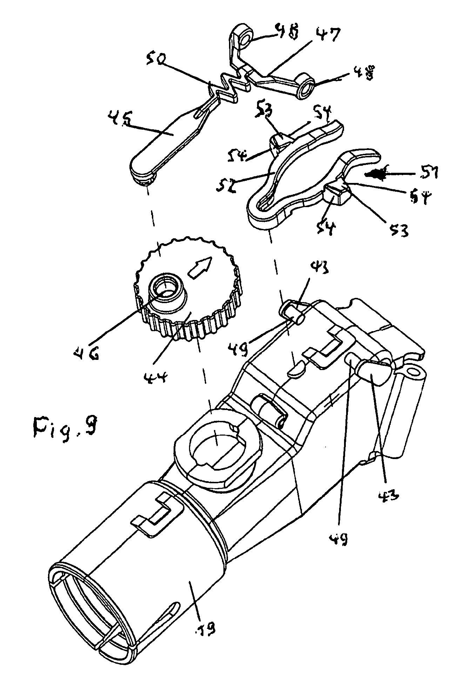

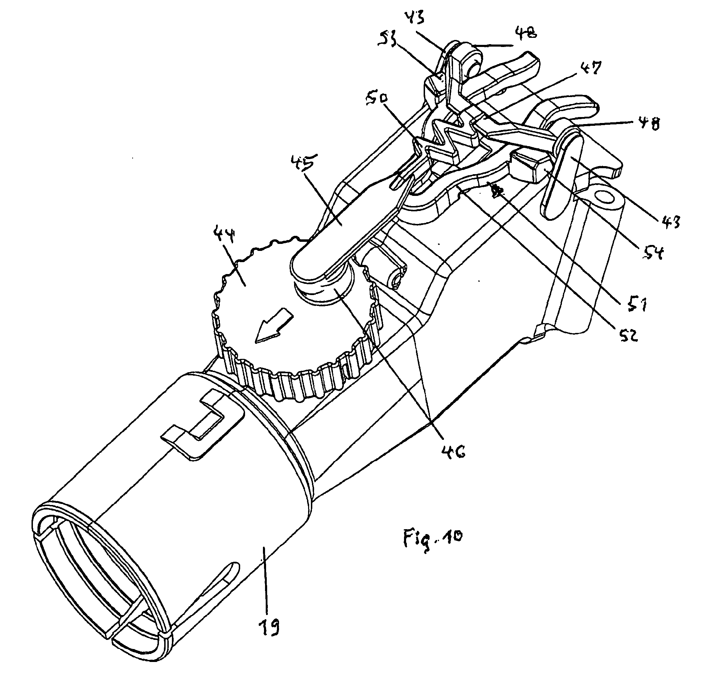

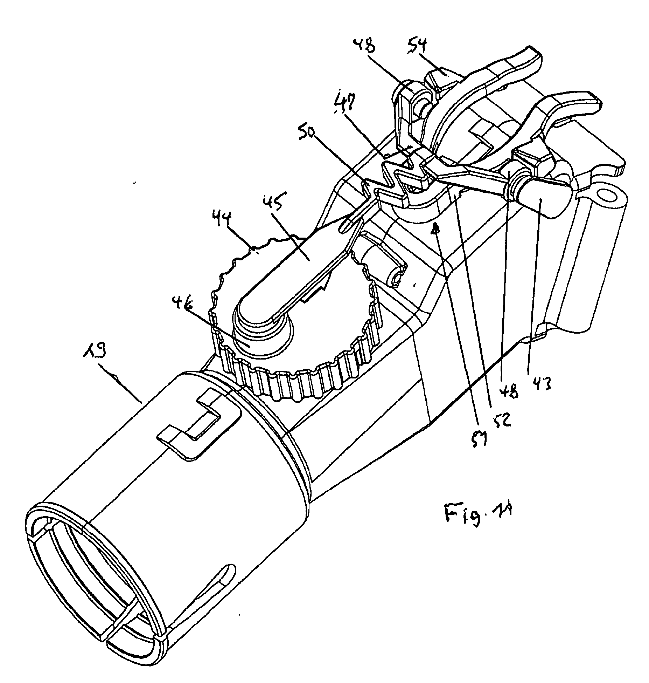

Die Fig. 9 bis 11 zeigen eine weitere Ausführungsform des Betätigungsmechanismus. In diesen Darstellungen ist die Schwenkachse des Absperrorgans nicht erkennbar. Mit ihr sind die Schwenkarme 43 an ihrem unteren Ende verbunden. Sie bewegen das Absperrorgan aus der in Fig. 10 gezeigten Öffnungsstellung in die in Fig. 11 gezeigte Schließstellung. Hierzu dient die an einer im wesentlichen senkrechten Achse gelagerte Rändelscheibe 44, die über eine als Kurbel wirkende Schub-/Zugstange 45, die bei 46 in der Rändelscheibe gelagert ist, auf eine Brücke 47 wirkt, die zwei Hülsen 48 miteinander verbindet. Die Hülsen 48 sind auf nach innen ragende Zapfen 49 am Ende der Schwenkarme gelagert. Die Schub-/Zugstange 45 weist einen querelastischen Abschnitt 50 auf, um den Kurbelwinkel auszugleichen.

Zwischen der Schub-/Zugstange und dem Einlaufquerschnitt des Auslaufstutzens ist eine die Brücke 47 untergreifende Federsperre 51 eingelegt, die einen harfenartigen in sich federnden Grundkörper 52 mit nach außen ragenden Ansätzen 53 mit Schrägflächen 54 aufweist.

Wie aus einem Vergleich der Fig. 10 und 11 ersichtlich, sichern die Ansätze 53 mit den Hülsen 48 anliegenden Schrägflächen die Absperrorgane in der Schließ- bzw. Öffnungsstellung.

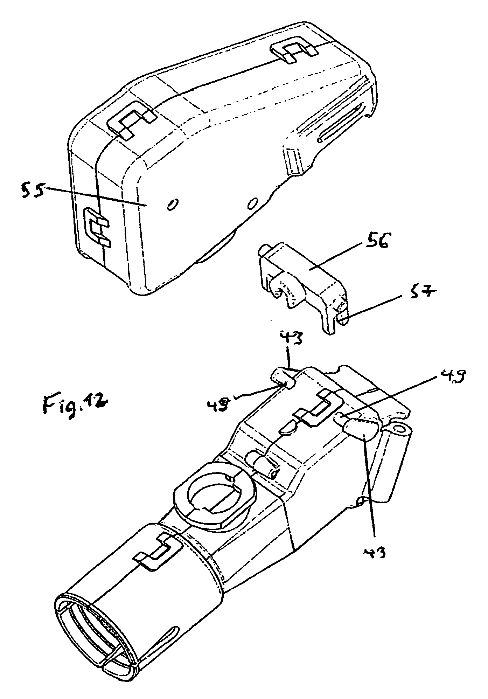

Fig. 12 zeigt eine Ausführungsform mit Fremdantrieb, z.B. einem Aktuator. Der nicht gezeigte Aktuator ist in einem Gehäuse 55 untergebracht. Das Stellglied des Aktuators weist ein Kupplungsstück 56 auf, das mit im wesentlichen senkrechten Längsschlitzen 57 versehen ist, welche die nach innen ragenden Zapfen 49 der Schwenkarme führen.

### Bezugszeichenliste

- 1: Saatguttank
- 2: Abdeckung von 1
- 3: Stützen
- 4: Gebläse
- 5: Übergabeeinrichtung
- 6: Steigleitung
- 7: Verteilerkopf
- 8: Schlauchleitungen
- 9: Leiste
- 10: Eggenfeld
- 11: Stützräder
- 12: Anschlussstutzen
- 13: Dosiergerät
- 14: Übergabekammer
- 15: Förderleitung
- 16: Auslaufstutzen
- 17: Absperrorgan (Klappe)
- 18: Schwenkachse
- 19: Anschluss für 8
- 20: Hebel
- 21: Hebel
- 22: Hebel
- 23: Montagesockel
- 24: Gehäuse
- 25: Vertiefung
- 26: Vertiefung
- 27: Handhabe
- 28: Zapfen
- 29: Feder
- 30: Deckel
- 31: untere Montagplatte
- 32: Längsschlitz
- 33: Längsschlitz
- 34: Lasche
- 35: Lasche
- 36: Hülsen
- 37: Hohlkehle
- 38: Steckschrauben
- 39: Konusscheiben
- 40: obere Montageplatte
- 41: Schraubenkopf
- 42: Mutter
- 43: Schwenkarme

- 44: Rändelscheibe
- 45: Zug-/Schubstange
- 46: Lager
- 47: Brücke
- 48: Hülsen
- 49: Zapfen an 43

- 50: querelastischer Abschnitt
- 51: Federsperre
- 52: Grundkörper
- 53: Ansätze
- 54: Schrägflächen
- 55: Gehäuse
- 56: Kupplungsstück
- 57: Längsschlitze

## Patentansprüche

1. Pneumatische Verteilmaschine für Saatgut oder Dünger mit einem Verteilerkopf (7), dem das zu verteilende Gut aus einem Behälter (1) über ein Dosierorgan (13) und einen von einem Luftstrom beaufschlagten Injektor sowie ein Steigrohr (6) zugeführt wird und der am Umfang Abgänge aufweist, an die je eine das zu verteilende Gut auf den Boden führende Schlauchleitung (8) angeschlossen ist, wobei an allen Abgängen schwenkbare Absperrorgane zum wahlweisen Unterbrechen der Gutzufuhr zu den Schlauchleitungen angeordnet sind, jeder Abgang von einem Auslaufstutzen (16) gebildet ist und alle Auslaufstutzen ein schwenkbares Absperrorgan (17) zum Unterbrechen oder zur Freigabe der Gutzufuhr zu den Schlauchleitungen (8) aufweisen, wobei jedes Absperrorgan zur Minimierung des Stauraums vor dem verschlossenen Absperrorgan (17) nahe dem Eingang des Auslaufstutzens schwenkbar gelagert ist, **dadurch gekennzeichnet, dass** jeder Auslaufstutzen (16) an seiner Oberseite einen Montagesockel (23) für einen Betätigungsmechanismus für das Absperrorgan (17) aufweist.

2. Pneumatische Verteilmaschine nach Anspruch 1, **dadurch gekennzeichnet, dass** der Betätigungsmechanismus ein Hebelgetriebe (20, 21, 22) aufweist.

3. Pneumatische Verteilmaschine nach Anspruch 2, **dadurch gekennzeichnet, dass** das Hebelgetriebe (20, 21, 22) manuell betätigbar und mittels einer über einen Totpunkt geführten Feder (29) in der jeweiligen Endlage fixierbar ist.

4. Pneumatische Verteilmaschine nach Anspruch 1, **dadurch gekennzeichnet, dass** der Betätigungsmechanismus mit dem Schwenklager des Absperrorgans verbundenen Schwenkarme aufweist.

5. Pneumatische Verteilmaschine nach Anspruch 4, **dadurch gekennzeichnet, dass** der manuell betätigbare Betätigungsmechanismus eine im wesentlichen vertikal gelagerte Rändelscheibe aufweist, die über eine Kurbel auf eine die Schwenkarme verbindende Brücke wirkt.

6. Pneumatische Verteilmaschine nach Anspruch 4 oder 5, **dadurch gekennzeichnet, dass** zwischen den Schwenkarmen eine Federsperre eingelegt ist, die die Schwenkarme in ihren beiden Endlagen - der Öffnungs- und der Schließstellung des Absperrorgans - sichert.

7. Pneumatische Verteilmaschine nach einem der Ansprüche 4 bis 6, **dadurch gekennzeichnet, dass** die Federsperre einen harfenartigen, in sich federnden Grundkörper aufweist, der nach außen ragende Nocken mit Schrägflächen aufweist, die mit den Schwenkarmen zusammenwirken.

8. Pneumatische Verteilmaschine nach Anspruch 1, **dadurch gekennzeichnet, dass** dem Betätigungsmechanismus ein fernbedienbarer Antrieb zugeordnet ist.

9. Pneumatische Verteilmaschine nach Anspruch 8, **dadurch gekennzeichnet, dass** der fernbedienbare Antrieb ein Aktuator ist.

10. Pneumatische Verteilmaschine nach einem der Ansprüche 2 oder 8, **dadurch gekennzeichnet, dass** der Antrieb auf einen Hebel des Hebelgetriebes wirkt.

11. Pneumatische Verteilmaschine nach einem der Ansprüche 5 bis 11, **dadurch gekennzeichnet, dass** der Antrieb mit einem Kupplungsstück mit im wesentlichen senkrechten Langlöchern auf am Ende der Schwenkarme nach innen ragende Zapfen wirkt.

12. Pneumatische Verteilmaschine nach einem der Ansprüche 8 bis 11, **dadurch gekennzeichnet, dass** der fernbedienbare Antrieb lösbar von einem Montagesockel auf einen anderen umsetzbar ist.

13. Pneumatische Verteilmaschine nach einem der Ansprüche 1 bis 12, dass die Auslaufstutzen (16) unten auf einer ringförmigen, das Steigrohr (6) umgebenden Montageplatte (31) und oben an einer ringförmigen Montageplatte (40) eingerastet sind, die von oben von einem runden Deckel (30) verschlossen ist.

14. Pneumatische Verteilmaschine nach einem der Ansprüche 1 bis 13, **dadurch gekennzeichnet, dass** benachbarte Auslaufstutzen (16) durch eine an ihrer einen Seite angeordnete Hülse (36) und eine an ihrer gegenüberliegenden Seite angeordnete, korrespondierende Hohlkehle (37), in die die Hülse (36) eingreift, ineinander geschachtelt sind.

15. Pneumatische Verteilmaschine nach einem der Ansprüche 1 bis 14, **dadurch gekennzeichnet, dass** die Auslaufstutzen mittels die Hülsen (36) und Konusscheiben (39) durchgreifender Steckschrauben (38) zwischen der unteren Montageplatte (31) und der oberen Montageplatte (40) mit dem Deckel (30) eingespannt sind.

## Claims

1. Pneumatic spreading machine for seeds or fertiliser, having a spreader head (7) to which the material to be spread is supplied from a vessel (1) via a dosing element (13) and an injector, which is charged by an air stream, and an ascending pipe (6), which spreader head has, on the circumference, exits to which there is connected in each case one hose line (8) which conducts the material to be spread onto the ground, wherein pivotable shut-off elements for selectively shutting off the material supply to the hose lines are arranged at all of the exits, each exit is formed by an outlet connector (16), and all of the outlet connectors have a pivotable shut-off element (17) for shutting off or permitting the supply of material to the hose lines (8), wherein each shut-off element is, to minimize the build-up space upstream of the closed shut-off element (17), pivotably mounted close to the entrance of the outlet connector, **characterized in that** each outlet connector (16) has, on its top side, a mounting pedestal (23) for an actuating mechanism for the shut-off element (17).

2. Pneumatic spreading machine according to Claim 1, **characterized in that** the actuating mechanism has a lever mechanism (20, 21, 22).

3. Pneumatic spreading machine according to Claim 2, **characterized in that** the lever mechanism (20, 21, 22) is manually actuable and can be fixed in the respective end position by means of a spring (29) which is guided beyond a dead point.

4. Pneumatic spreading machine according to Claim 1, **characterized in that** the actuating mechanism has pivot arms which are connected to the pivot bearing of the shut-off element.

5. Pneumatic spreading machine according to Claim 4, **characterized in that** the manually actuable actuating mechanism has a substantially vertically mounted knurled disc which acts via a crank on a bridge which connects the pivot arms.

6. Pneumatic spreading machine according to Claim 4 or 5, **characterized in that**, between the pivot arms, there is situated a spring lock which secures the pivot arms in their two end positions - the open position and the closed position of the shut-off element.

7. Pneumatic spreading machine according to one of Claims 4 to 6, **characterized in that** the spring lock has a harpshaped, inherently resilient main body which has outwardly projecting cams with oblique surfaces which interact with the pivot arms.

8. Pneumatic spreading machine according to Claim 1, **characterized in that** a remote-controllable drive is assigned to the actuating mechanism.

9. Pneumatic spreading machine according to Claim 8, **characterized in that** the remote-controllable drive is an actuator.

10. Pneumatic spreading machine according to one of Claims 2 and 8, **characterized in that** the drive acts on a lever of the lever mechanism.

11. Pneumatic spreading machine according to one of Claims 5 to 11, **characterized in that** the drive acts, by way of a coupling piece with substantially vertical slots, on pegs that project inwardly on the end of the pivot arms.

12. Pneumatic spreading machine according to one of Claims 8 to 11, **characterized in that** the remote-controllable drive can be releasably transferred from one mounting pedestal to another.

13. Pneumatic spreading machine according to one of Claims 1 to 12, **characterized in that** the outlet connectors (16) are latched at the bottom onto an annular mounting plate (31) which surrounds the ascending pipe (6) and at the top onto an annular mounting plate (40) which is closed off on the top by a circular cover (30).

14. Pneumatic spreading machine according to one of Claims 1 to 13, **characterized in that** adjacent outlet connectors (16) are nested one inside the other by means of a bushing (36) arranged on one side thereof and a corresponding channel (37) which is arranged on the opposite side thereof and into which the bushing (36) engages.

15. Pneumatic spreading machine according to one of Claims 1 to 14, **characterized in that** the outlet connectors are braced between the lower mounting plate (31) and the upper mounting plate (40) with the cover (30) by means of plugthrough screws (38) which extend through the bushings (36) and conical discs (39).

## Revendications

1. Machine de distribution pneumatique pour semences ou engrais avec une tête de répartiteur (7) amenée au produit à répartir provenant d'un réservoir (1) via un organe de dosage (13) et un injecteur chargé d'un flux d'air ainsi qu'un tube montant (6) et comportant des dérivations au niveau de la périphérie au niveau desquelles la respectivement une conduite de tuyau flexible (8) guidant le produit à répartir sur le sol est rattachée, des organes de blocage pouvant pivoter permettant d'interrompre de façon sélective l'amenée de produit aux conduites de tuyau flexible étant disposés au niveau de toutes les dérivations, chaque dérivation étant constituée par un manchon de purge (16) et tous les manchons de purge comportant un organe de blocage (17) pouvant pivoter permettant d'interrompre ou de libérer l'amenée de produit aux conduites de tuyau flexible (8), chaque organe de blocage étant disposé de façon à pouvoir pivoter à proximité de l'entrée du manchon de purge pour minimiser l'espace d'engorgement devant l'organe de blocage (17) fermé, **caractérisée en ce que** chaque manchon de purge (16) présente un socle de montage (23) servant au mécanisme d'actionnement prévu pour l'organe de blocage (17), au niveau de son côté supérieur.

2. Machine de distribution pneumatique selon la revendication 1, **caractérisée en ce que** le mécanisme d'actionnement comporte une transmission de levier (20, 21, 22).

3. Machine de distribution pneumatique selon la revendication 2, **caractérisée en ce que** la transmission de levier (20, 21, 22) peut être actionnée manuellement et peut être fixée dans la position d'extrémité respective à l'aide d'un ressort (29) guidé via un point mort.

4. Machine de distribution pneumatique selon la revendication 1, **caractérisée en ce que** le mécanisme d'actionnement comporte des bras de pivotement reliés au palier pivotant de l'organe de blocage.

5. Machine de distribution pneumatique selon la revendication 4, **caractérisée en ce que** le mécanisme d'actionnement actionnable à la main comporte un disque crénelé disposé pour l'essentiel verticalement et agissant sur un point reliant les bras de pivotement via un vilebrequin.

6. Machine de distribution pneumatique selon la revendication 4 ou 5, **caractérisée en ce qu'**un élément de blocage de ressort est encastré entre les bras de pivotement, ledit élément de blocage de ressort fixant les bras de pivotement dans leurs deux positions d'extrémité - position d'ouverture et de fermeture de l'organe de blocage.

7. Machine de distribution pneumatique selon l'une quelconque des revendications 4 à 6, **caractérisée en ce que** l'élément de blocage de ressort comporte un corps de base comportant des cames saillant vers l'extérieur dotées de surfaces obliques entrant en interaction avec les bras de pivotement.

8. Machine de distribution pneumatique selon la revendication 1, **caractérisée en ce qu'**un entraînement télécommandable est associé au mécanisme d'actionnement.

9. Machine de distribution pneumatique selon la revendication 8, **caractérisée en ce que** l'entraînement télécommandable est un actionneur.

10. Machine de distribution pneumatique selon l'une quelconque des revendications 2 ou 8, **caractérisée en ce que** l'entraînement agit sur un levier de la transmission de levier.

11. Machine de distribution pneumatique selon l'une quelconque des revendications 5 à 11, **caractérisée en ce que** l'entraînement agit sur les tenons saillant vers l'intérieur au niveau de l'extrémité des bras de pivotement par le biais d'une pièce de couplage dotée de trous oblongs pour l'essentiel verticaux.

12. Machine de distribution pneumatique selon l'une quelconque des revendications 8 à 11, **caractérisée en ce que** l'entraînement télécommandable peut être déplacé de façon amovible d'un socle de montage à un autre.

13. Machine de distribution pneumatique selon l'une quelconque des revendications 1 à 12, **caractérisée en ce que** le manchon de purge (16) est encliqueté en bas sur une plaque de montage (31) annulaire entourant le tube montant (6) et en haut au niveau d'une plaque de montage (40) annulaire, ledit manchon étant fermé par en haut par un cache (30) rond.

14. Machine de distribution pneumatique selon l'une quelconque des revendications 1 à 13, **caractérisée en ce que** les manchons de purge (16) connexes sont emboîtés l'un dans l'autre au travers d'un fourreau (36) disposé au niveau de leur premier côté et d'une gorge creuse (37) correspondante disposée au niveau de leur côté opposé et dans laquelle le fourreau (36) s'engrène.

15. Machine de distribution pneumatique selon l'une quelconque des revendications 1 à 14, **caractérisée en ce que** les manchons de purge sont fixés au cache (30) à l'aide de vis d'enfichage (38) engrenant les fourreaux (36) et disques coniques (39) entre la plaque de montage (31) inférieure et la plaque de montage (40) supérieure.
